# EUROPÄISCHE PATENTANMELDUNG

(11) **EP 0 569 668 A1**
(43) Veröffentlichungstag der Anmeldung: **18.11.1993**
(21) Anmeldenummer: 93102601.7
(22) Anmeldetag: 19.02.1993
(51) Int. Cl.: F16H 61/02, F16H 59/14

(54) **Getriebeschalteinrichtung**

(30) Priorität: 13.05.1992 DE 4215018
(71) Anmelder: Volkswagen Aktiengesellschaft, D-38436 Wolfsburg (DE)
(72) Erfinder: Remmlinger, Ulrich, Dr.-Ing., W-3300 Braunschweig (DE)

(57) **Zusammenfassung**

Getriebeschalteinrichtung zur selbsttätigen Schaltung eines mehrgängigen Gangwechselgetriebes (3), das einem von einem Antriebsmotor (1) angetriebenen Fahrzeug zugeordnet ist, mit
- einer Steuereinrichtung (4), in der zumindest zwei Kennfelder (16, 17) abgelegt sind, durch die unterschiedliche Betriebsweisen fü die Schaltung der Getriebegänge in Abhägigkeit von den Betriebszustand des Antriebsmotors (1) charakterisierenden Größen vorgegeben sind,
- einer Wähleinrichtung (Sensoreinrichtung (12)), durch die jeweils eines der Kennfelder (16, 17) aktivierbar ist,
gekennzeichnet durch eine Betriebsweise, gemäß eine Umschaltung der Kennfelder durch die Wähleinrichtung allein im Hinblick auf Über-oder Unterschreitung eines vorgegebenen Grenzwertes der zeitlichen Veränderung der Bewegung genau eines Leistungstellglieds erfold.

## Beschreibung

Die Erfindung betrifft eine Einrichtung zur selbsttätigen Schaltung eines mehrgängigen Gangwechselgetriebes gemäß dem Oberbegriff des Patentanspruchs 1.

Gattungsgemäße Getriebeschalteinrichtungen sind allgemein bekannt und weisen in der Regel eine mit einer Wählhebeleinrichtung verbundene Taste auf, mit deren Hilfe in Kennfeldern der Steuerung abgelegte Programme angewählt werden können. Am weitesten verbreitet sind sogenannte "Eco/Sport-Tasten", mit deren Hilfe der Fahrer eines Fahrzeugs ein Kennfeld anwählen kann, das zur Ermöglichung einer maximalen Beschleunigung des Fahrzeugs sehr spät die jeweils erforderlich werdenden Gangwechsel einleitet. Im Hinblick auf einen möglichst günstigen Treibstoffverbrauch kann durch diese "Eco/Sport-Taste" in der Steuerung des Getriebes aber auch ein Kennfeld angewählt werden, welches die jeweils vorzunehmenden Gangwechsel bei der Beschleunigung des Fahrzeugs möglichst früh einleitet. Bei derartig ausgerüsteten Getriebeschalteinrichtungen hat sich gezeigt, daß die als "Eco/Sport-Taste" ausgeführte Wähleinrichtung vom größten Teil der Fahrer nicht genutzt wird, obwohl eine Differenzierung von verschiedenen in unterschiedlichen Kennfeldern abgelegten Schaltprogrammen im Prinzip erwünscht ist.

Aus der DE-36 21 674-A1 ist eine Getriebeschalteinrichtung bekannt, bei der die Schaltung der einzelnen Getriebegänge unter anderem in Abhängigkeit von der zeitlichen Veränderung des Fahrpedal- oder Drosselklappenwinkels verstellbar ist. Um den individuellen Fahrweisen verschiedener Fahrer gerecht zu werden, ist dort eine Speichervorrichtung vorgesehen, in welcher über eine gewisse Betriebszeit hinweg die Geschwindigkeiten der Fahrpedalbetätigungen festgehalten werden. Damit wird dem jeweiligen Fahrer ein individuelles Schaltprogramm zugeordnet. Diese Art der Steuerung greift also auf Vorgänge in der Vergangenheit zurück, um den Willen des Fahrers zu ermitteln.

Die zuvor beschriebenen Konzepte zur Wahl bestimmter Schaltprogramme sind einander ähnlich, weil für jede aktuelle Verkehrssituation stets ein in der Vergangenheit bestimmtes Schaltprogramm zur Verfügung steht.

Die EP-0 406 615-A2 offenbart demgegenüber ein Verfahren zur Steuerung eines Getriebes, bei dem mehrere Betriebs- oder Fahrparameter des Fahrzeugs und dessen Motors sowie deren zeitliche Änderungen erfaßt werden. Durch komplizierte Verknüpfungsregeln wird ein Schaltkriterium ermittelt, nach dem für eine gerade aktuelle Fahrsituation eine selbsttätige Schaltung vorgenommen wird.

Vor diesem Hintergrund liegt der Erfindung die Aufgabe zugrunde, gattungsgemäße Geriebeschalteinrichtungen so weiterzubilden, daß mit geringem steuerungsaufwand für jede aktuelle Verkehrssituation das jeweils günstigste Schaltprogramm spontan zur Verfügung steht.

Diese Aufgabe wird gelöst durch die Merkmale des Patentanspruchs 1. Die Unteransprüche enthalten zweckmäßige Weiterbildungen der Erfindung.

Erfindungsgemäß erfolgt also die Anwahl verschiedener Schaltprogramme ausschließlich in Abhängigkeit von der zeitlichen Veränderung der Bewegung eines Leistungsstellgliedes des Antriebsmotors. Wird beispielsweise bei der Betätigung des Fahrpedals ein vorgegebener Grenzwert der Betätigungsgeschwindigkeit überschritten, erfolgt automatisch eine Umschaltung in ein "Sport"-Schaltprogramm, wenn zuvor ein "Eco"-Schaltprogramm aktiviert war. Ein derartiges Signal zur Umschaltung kann aber auch der zeitlichen Veränderung des Drosselklappenwinkels entnommen werden.

Der Vorteil der Erfindung ist darin zu sehen, das ohne großen Umrüstaufwand in bereits bestehenden Getriebeschalteinrichtungen die "Eco/Sport-Taste" ersatzlos entfallen kann und nur eine geringfügige Anpassung in der ohnehin vorhandenen Steuerung vorgenommen werden muß.

Mit der erfindungsgemäßen Getriebeschalteinrichtung ist ein auf Treibstoffersparnis ausgerichteter Fahrer in einer von ihm als kritisch empfundenen Verkehrssituation in der Lage, das Fahrzeug "am Gas hängen zu lassen", wenn er eine bestimmte Fahrpedalgeschwindigkeit überschreitet. Er ist nicht mehr darauf angewiesen, über einen sogenannten Kick-Down das Getriebe in einem niedrigeren Gang zu halten, so daß unnötige Verärgerungen, Hektik und Streß vermieden werden können. Umgekehrt ist aber auch der sportliche Fahrer, der selbst noch bei sportlicher Fahrweise verbrauchsgünstig fahren möchte, in der Lage, in Abschnitten mit ruhiger Fahrt - beispielsweise nach dem Aufschließen zu einer Kolonne - das Fahrzeug möglichst treibstoffsparend zu bewegen, ohne daß eine gesonderte Umschaltung nötig wird.

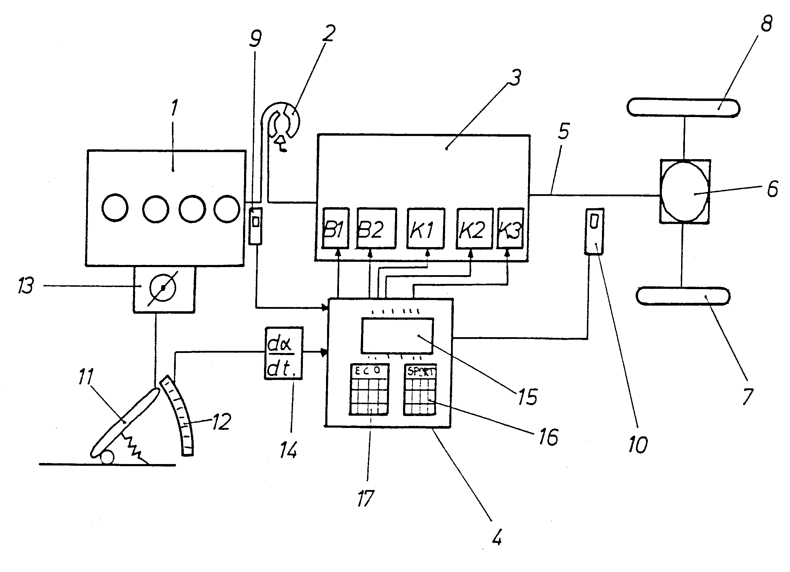

Ein besonders vorteilhaftes Ausführungsbeispiel der Erfindung wird mit Hilfe der Zeichnung erläutert. Diese zeigt in einem schematischen Bild einen Fahrzeugantrieb mit der erfindungsgemäßen Getriebeschalteinrichtung.

Man erkennt einen Antriebsmotor 1, der über einen Drehmomentwandler 2 mit einem Geschwindigkeitswechselgetriebe 3 verbunden ist. In diesem befinden sich hier Bremsen B1 und B2 sowie Kupplungen K1, K2 und K3, die in Abhängigkeit von Signalen der Steuereinrichtung 4 zur Schaltung der verschiedenen Gänge des Geschwindigkeitwechselgetriebes jeweils zu- und abschaltbar sind.

Über eine Abtriebswelle 5, ein nachgeschaltetes Ausgleichgetriebe 6 und Räder 7, 8 wird die Leistung des Antriebsmotors 1 auf die Straße übertragen. Die Steuereinrichtung 4 ist mit Drehzahlsensoren 9 und 10 verbunden und erhält außerdem Signale von einer einem Fahrpedal 11 zugeordneten Sensoreinrichtung 12. Hier nur symbolisch angedeutet ist eine dem Antriebsmotor 1 zugeordnete Drosselklappe 13, deren Öffnungsgrad vom Fahrpedal 11 bestimmt wird. Die Signale der Sensoreinrichtung 12 werden über ein Differenzierglied 14 der Steuereinrichtung 4 zugeführt, in welcher die von den verschiedenen Sensoren gemeldeten Signale innerhalb einer Rechnereinheit 15 verarbeitet werden. In der Steuereinrichtung 4 sind hier weiterhin ein auf sportliche Fahrweise ausgerichtetes Kennfeld 16 und ein auf Treibstoffersparnis abzielendes Kennfeld 17 abgelegt.

Bei der erfindungsgemäßen Getriebeschalteinrichtung wird nach der in Betriebnahme des Fahrzeugs durch die Steuereinrichtung 4 zunächst in einer Grundstellung das zur ECO-Charakteristik gehörende Kennfeld 17 aktiviert. Wird dann vom Fahrzeugbediener durch Betätigung des Fahrpedals 11 über das Differenzierglied 14 ein schnelles Öffnen der Drosselklappe 13 (beispielsweise dα/dt > 50 %/s) signalisiert, erfolgt in der Steuereinrichtung 4 selbsttätig eine Umschaltung in die Sport-Charakteristik. Wird nach der Umschaltung das Fahrpedal 11 konstant gehalten oder gar geschlossen, erfolgt wieder eine Rückschaltung in das ECO-Kennfeld 17. Bei schnellem Schließen erfolgt keine Umschaltung. Diese Rückschaltung betrifft nicht die Schaltglieder des Getriebes 3, sondern nur die Kennfelder in der Steuereinrichtung 4. Zweckmäßigerweise ist für eine solche Rückschaltung in der Steuereinrichtung 4 ein hier nicht dargestelltes Zeitglied vorgesehen, durch welches nach einer vorgegebenen Zeitspanne,während der fortlaufend eine der Rückschaltbedingungen erfüllt ist, die Rückschaltung selbsttätig ausgelöst wird.

Wünscht der Bediener des Fahrzeugs andererseits keine maximale Leistung, sondern nur Vollgas im bereits eingelegten Gang, dann bleibt in der Steuereinrichtung 4 die im Anfangszustand aktivierte ECO-Charakteristik erhalten. Für den zuletzt genannten Fall kann allerdings beim Fahrzeugbediener situationsabhängig der Wunsch entstehen, eine Umschaltung vom Kennfeld 17 (ECO) zum Kennfeld 16 (Sport) vorzunehmen, wenn er bereits das Fahrpedal 11 vollständig durchgetreten hat. Für diesen Fall ist ein in der Zeichnung nicht weiter dargestellter Kick-Down-Schalter vorgesehen, der nur durch kurzes Antippen eine Umschaltung der Kennfelder erlaubt und anschließend nicht weiter betätigt werden muß.

Erfindungsgemäß ist weiter vorgesehen, daß für Öffnungen der Drosselklappe 13 unterhalb von 90% der bei der Aktivierung der Getriebeschalteinrichtung eingestellte Grundzustand (ECO-Charakteristik) eingestellt bleibt, wenn nach Ablauf einer vorgebbaren Zeitspanne - beispielsweise größer als 1,1 Sekunden - die Öffnungsgeschwindigkeit der Drosselklappe 13 zwischen +7,5 und -50 %/Sekunde beträgt. Wenn diese zuletzt genannte Bedingung erfüllt ist und zuvor fahrsituationsabhängig die Sport-Charakteristik eingestellt war, erfolgt selbsttätig eine Umschaltung auf ECO-Charakteristik.

Die Betätigung des Kick-Down-Schalters bei eingestellter Sport-Charakteristik hat zur Folge, daß diese auch weiterhin eingestellt bleibt.

Für Öffnungsgeschwindigkeiten der Drosselklappe 13, die nicht durch die oben genannten Bereiche erfaßt werden, bleibt die jeweils eingestellte Charakteristik erhalten.

Verständlicherweise ist die Erfindung nicht auf das zuvor beschriebene Ausführungsbeispiel beschränkt. Insbesondere im Hinblick auf die Festlegung der Grenzwerte bestimmter Öffnungswinkelgeschwindigkeiten sowie vorgebbarer Zeitspannen können je nach Abstimmung der Getriebeschalteinrichtung Variationen vorgenommen werden. Im übrigen ist die Erfindung auch nicht auf die Umschaltung zwischen zwei Kennfeldern beschränkt. Ebenso ist es denkbar, über das Differenzierglied 14 mehr als zwei Bereiche für die Öffnungsgeschwindigkeit der Drosselklappe 13 meßtechnisch auszuwerten, um dann Umschaltungen zwischen einer größeren Anzahl von Kennfeldern vornehmen zu können.

Darüber hinaus kann ein Kriterium zur Umschaltung von Kennfeldern ergänzend oder alternativ aus der Drehzahl des Antriebsmotors 1 oder Fahrgeschwindigkeit des Fahrzeugs durch Auswertung der von den Sensoren 9 bzw. 10 erfaßten Signale ermittelt werden.

Mit der zuvor beschriebenen Getriebeschalteinrichtung können die bereits auf dem Markt befindlichen ECO/Sport-Tasten ersetzt werden, ohne daß an der Steuereinrichtung selbst apparative Veränderungen notwendig werden.

## Patentansprüche

1. Getriebeschalteinrichtung zur selbsttätigen Schaltung eines mehrgängigen Gangwechselgetriebes (3), das einem von einem Antriebsmotor (1) angetriebenen Fahrzeug zugeordnet ist, mit
- einer Steuereinrichtung (4), in der zumindest zwei Kennfelder (16, 17) abgelegt sind, durch die unterschiedliche Betriebsweisen für die Schaltung der Getriebegänge in Abhängigkeit von den Betriebszustand des Antriebsmotors (1) charakterisierenden Größen vorgegeben sind,
- einer Wähleinrichtung (Sensoreinrichtung 12), durch die jeweils eines der Kennfelder (16, 17) aktivierbar ist,
dadurch gekennzeichnet, daß
- die Wähleinrichtung eine Sensoreinrichtung (12) ist, deren Signale von der Steuereinrichtung (4) zur Aktivierung eines Kennfeldes (16, 17) ausschließlich im Hinblick auf Überoder Unterschreitung wenigstens eines vorgegebenen Grenzwertes der zeitlichen Veränderung der Bewegung eines Leistungsstellgliedes des Antriebsmotors (1) ausgewertet werden.

2. Getriebeschalteinrichtung nach Anspruch 1, dadurch gekennzeichnet, daß das Leistungsstellglied ein Fahrpedal (11) ist.

3. Getriebeschalteinrichtung nach Anspruch 1, dadurch gekennzeichnet, daß das Leistungsstellglied eine Drosselklappe (13) ist.

4. Getriebeschalteinrichtung nach Anspruch 1, dadurch gekennzeichnet, daß in einem ersten Kennfeld (17) eine auf günstigen Treibstoffverbrauch ausgerichtete Betriebsweise und in einem zweiten Kennfeld (16) eine auf erhöhte Beschleunigung des Fahrzeugs ausgerichtete Betriebsweise festgelegt ist.

5. Getriebeschalteinrichtung nach Anspruch 1, dadurch gekennzeichnet, daß ein der Steuereinrichtung (4) zugeordnetes Zeitglied vorgesehen ist, durch welches nach einer Umschaltung vom ersten zum zweiten Kennfeld eine Rückschaltung zum ersten Kennfeld auslösbar ist.
